# EUROPEAN PATENT SPECIFICATION

(11) **EP 1 501 238 B1**
(45) Date of publication and mention of the grant of the patent: **14.11.2007**
(21) Application number: 03016787.8
(22) Date of filing: 23.07.2003
(51) Int. Cl.: H04L 9/30, H04L 9/32, G06F 1/00

(54) **Method and system for key distribution comprising a step of authentication and a step of key distribution using a KEK (key encryption key)**
Verfahren und System zur Schlüsseldistribution mit einem Authentifizierungschritt und einem Schlüsseldistributionsschritt unter Verwendung von KEK (key encryption key)
Méthode et système de distribution de clé comprenant une étape d'authentification et une de distribution de clé à l'aide de KEK (key encryption key)

(43) Date of publication of application: 26.01.2005
(73) Proprietor: Eisst Limited, London N17 JQ (GB)
(72) Inventor: Ronchi, Corrado, 00196 Roma (IT); Zakhidov, Shukhrat, Tashkent 700000 (UZ)
(74) Representative: Gervasi, Gemma

(56) References cited:
- EP-A- 1 249 981
- US-A- 5 892 828
- US-A- 6 154 543

## Description

### Technical field

The present invention relates to data communications systems' security and, more particularly, to the secure processing of messages using cryptography. In particular, it refers to authentication methods and to a data management and protection system for data exchanged between server and clients.

### Background of the invention

Cryptography algorithms are widely used to ensure the security or integrity of messages in data communications systems. Various types of such algorithms exist and they are mainly divided in two principal classes, namely symmetric and asymmetric key algorithms.

One well known asymmetric key algorithm is the Rivest-Shamir-Aldeman (RSA) algorithm. In such system, the key used for encryption is different from the key used for decryption, i.e. the encryption algorithm is not symmetric, and the decryption key cannot be easily calculated from the encryption key. Thus, one key generally the encryption key, may be published and is called public key, while the paired key is kept secret and is called the private key.

The public key is made available so that anyone can use it to encrypt data which the receiving party then decrypts using his private key. This system is considered secure since no-one can decrypt the data without access to the private key and since knowledge of the public key does not allow to readily obtain the private key.

However, such public key encryption schemes are computationally intensive and demand substantially higher computing resources, such as processing power and memory requirements, for encryption and decryption than symmetric key schemes. In practical implementations, therefore, a message to be transferred is typically first encrypted by a symmetric encryption algorithm using a pseudorandom secret key. The secret key is then encrypted utilizing the public key of the intended recipient, and both the encrypted message and the encrypted secret key are transmitted to the intended recipient. When the message and secret key are delivered, the recipient uses the private key to decrypt the secret key, and then decrypts the message using the secret key.

The larger an encryption key, e.g. 128 bits confronted to 56 bits, the greater is the security provided by the cryptography algorithm. Furthermore, basic security principles suggest to frequently change encryption keys and to use different keys to encrypt a large quantity of data. As a result, encryption keys cannot be easily committed to memory or stored by common users and instead are most commonly stored in centralized non-volatile storage means, such as within one or more databases containing the encryption keys and the encrypted data.

The security of such cryptography systems is therefore limited by the security of the database(s) containing the encryption keys and encrypted data and by the security of the communication channel used to retrieve information from the database. For example, in a networked computer environment where a number of clients share the resources of a common server, the encryption key database may be made accessible over the network, with encryption keys retrieved upon demand over the network. It is obvious that security would be severely compromised if the encryption keys are readily available to anyone or are easily intercepted and used in that or similar situations. It would be desirable, therefore, to provide a mechanism for storing and managing encryption keys for a distributed key storage cryptography system.

Various methods have been proposed in the prior art to provide such means for secure data and key management and distribution, especially in the context of a public key cryptography system.

One method of authentication and storage of private keys in a public key cryptography system is described in the US-A-6370250, where private keys are protected within private key storage and communication by the requirement of a password during decryption. Upon receipt of a message encrypted with the public key, both the public and private key are retrieved from a single key storage.

Whilst this and other known methods go some way to alleviating the problem of securing key distribution and storage, they suffer from several disadvantages inherent in storing the secret key(s) and data either on a centralized server database or on a device in the possession of the user, or in requiring the storage of the key(s) needed to decrypt the data to be on a single device.

Firstly, it is possible that the storage devices may be probed to obtain the secret key(s). This is particularly true in the case the key storage is kept on the device in possession of the user.

Furthermore, in the case of a centralized server managing the key storage and distribution, typical key distribution schemes require users to reveal in some form their secret authentication credentials to the server. Such disclosure may enable the server administrators to access the users' secrets, should they desire or be asked to do so.

Document EP 1249981 describes a method for the provisioning of security services to the users by means of three alternative schemes for distribution and management of private keys. The first scheme is server-based, password-encrypted scheme. In this scheme, the private key is encrypted with the user's password after generation. This encrypted private key is then sent to the server for storage. The encrypted private key is downloaded to the client machine after login authentication and decrypted by the client when needed for reading mail, decrypting files or signing mail.

The second is a server-based, non-encrypted scheme. In this scheme the private key is encrypted by the public key of a domain-owner and then sent to the server for storage.

When the client requires the private key, it is decrypted using the domain-owner private key and downloaded to the client.

The third is a client-based, password-encrypted scheme. In this scheme, the private key is encrypted with the user's password after generation. It is then stored on local storage such as hard disk, floppy disk, smart card, memory-card, etc. When the client requires the private key, the local copy is read and decrypted. For speed reasons, the local copy may be read into memory when the client is initialised and then decrypted when needed.

The present invention is directed at providing a secure method of enabling encrypted messages to be received and decrypted by an authorised user in such a manner that it can be shown that only the authorised user can access all the secret keys required for the processing of a particular message or data.

### Summary of the invention

It is therefore one object of the present invention to provide an authentication and authorization method and system for accessing private keys utilized in decoding an encrypted data transfer, accessible only by the user or only with the authorisation of the user.

It is therefore one object of the present invention to provide an authentication and authorization method and system for accessing secret data which does not require the user to share its own private keys with other users, or with any centralized authorization system or server.

It is another object of the present invention to provide an improved method and system for achieving electronic data transfer security.

It is yet another object of the present invention to provide a method and system for defeating secret key discovery attacks in a distributed key cryptography system. The foregoing objects are achieved by means of a method for authentication, data communication, storage and retrieval according to claim 1. It uses a private key Fk encrypted with a first key encrypting key Wk, which is also encrypted using a second key encrypting key Dk. This latter key is encrypted using a hashed passphrase value H2, obtained by hashing a passphrase PP known only to the authorized user. The system comprises a first data processing system S adapted for data communication with a second data processing system C via a network. The second data processing system is also adapted for data communication with a system user via a network or other communication means.

The first data processing system comprises first data storage means in which are stored in a secure manner the hashed passphrase value H1, the encrypted second key encrypting key, the encrypted private key and encrypted data and messages. The second data processing system comprises second data storage means in which are stored in a secure manner the encrypted first key encrypting key Wk and an executable code that can perform encryption and decryption operations and that can compute at least two distinct hash strings H1 and H2 from one single passphrase string PP received from the user.

Upon receipt of a request initiated by the user, the second data processing system prompts the user to enter a passphrase PP. The first hashed passphrase is transferred to the first data processing system, where it is compared with the stored hash string H1. If they match, the first data processing system transfers to the second data processing system the encrypted second key encrypting key Dk.

A candidate key is obtained by decrypting Dk using the second hashed passphrase H2. The passphrase can be at this stage verified using several means, for example by encrypting a well-known message stored on the second data processing system with the candidate key, transferring it to the first data processing system and comparing it with the encrypted well-known message previously stored. If they match the passphrase is verified and the user is authenticated and authorized.

After the user has been authorized, the first data processing system transmits to the second data processing system the encrypted private key Fk and the encrypted data. The second processing system then decrypts the encrypted first key encrypting key Wk using Dk, decrypts the encrypted private key Fk using the decrypted first key encrypting key Wk and decrypts the data using Fk.

It is noteworthy that interception of any aforementioned transaction is useless since only encrypted keys and encrypted data are transmitted and that such encrypted quantities alone cannot be utilized to decrypt the data without knowledge of the key encrypting key Wk safely stored in encrypted form on the second data processing system.

It is also noteworthy that the authentication and authorization procedure of the user is carried out in two stages, the first one performed by the first data processing system and the second one by the second data processing system only after the first stage has been successfully completed. However, no information received by the first data processing system during the authentication procedure is relative to the encryption keys stored in its data storage. At the same time, the second data processing system must receive the encrypted second key encrypting key before it can readily perform any data decryption.

### Brief description of the drawings

Preferred embodiments of the present invention will now be described, by way of example only, with reference to the accompanying drawings, in which:
Fig. 1 shows a component diagram of an example of a first embodiment of the system for authentication, data communication, storage and retrieval according to the invention;
Fig.1a shows diagrammatic notation to represent encryption and decryption operations according to the invention;
Fig. 2 shows the basic scheme of the functional relations between the encrypting/decrypting keys and hashes in the method according to the invention.

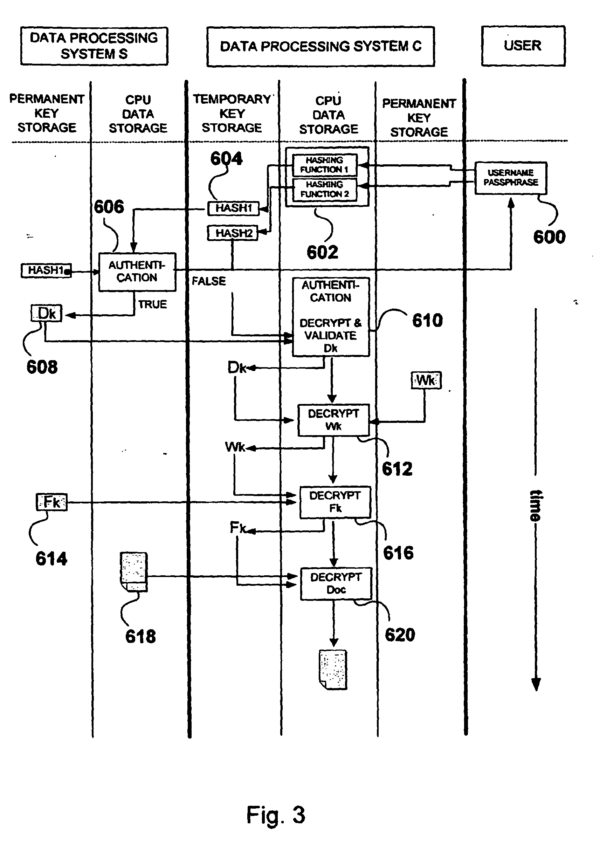

Fig. 3 shows a flow diagram of an embodiment of the method for authentication, data communication, storage and retrieval according to the invention;
Fig. 4 shows a component diagram of an example of a second embodiment of the system for authentication, data communication, storage and retrieval in case of more than one client system, according to the invention;
Fig. 5 shows the basic scheme of the functional relations between the encrypting/decrypting keys and hashes of a method according to a second embodiment of the invention;
Figures 6, 7 and 8 show flow diagrams of the method for authentication, data communication, storage and retrieval according to the second embodiment of the invention.

### Detailed description of preferred embodiments of the invention

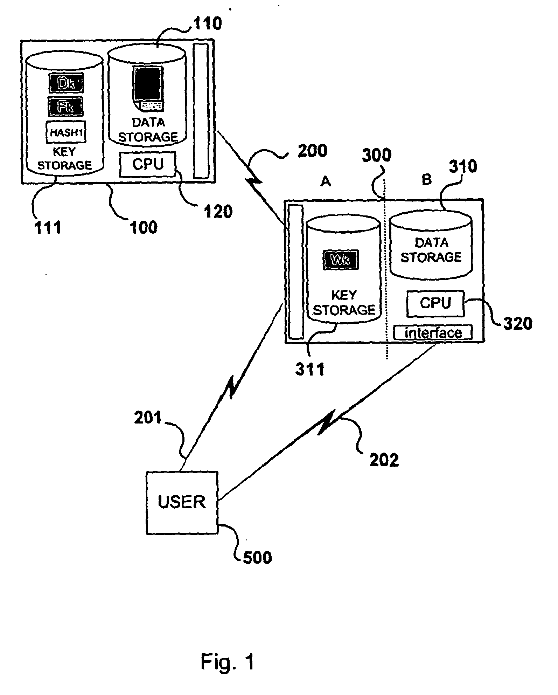

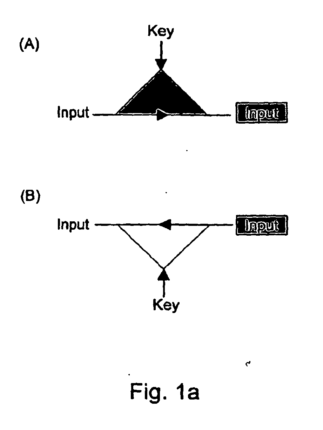

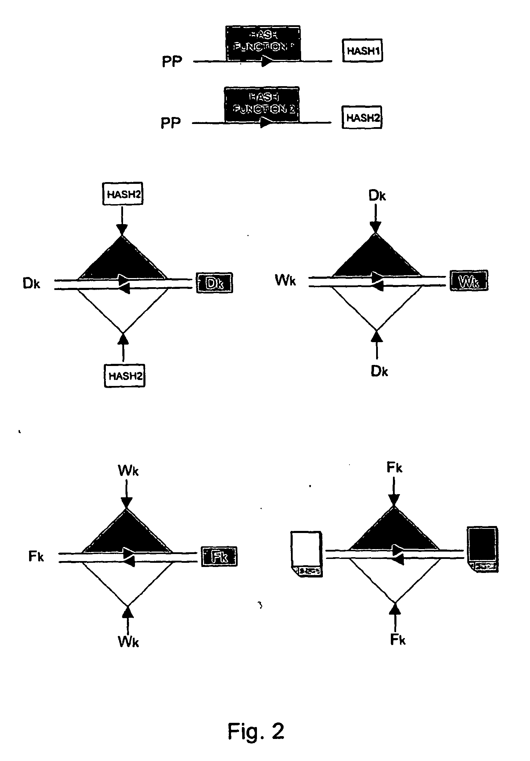

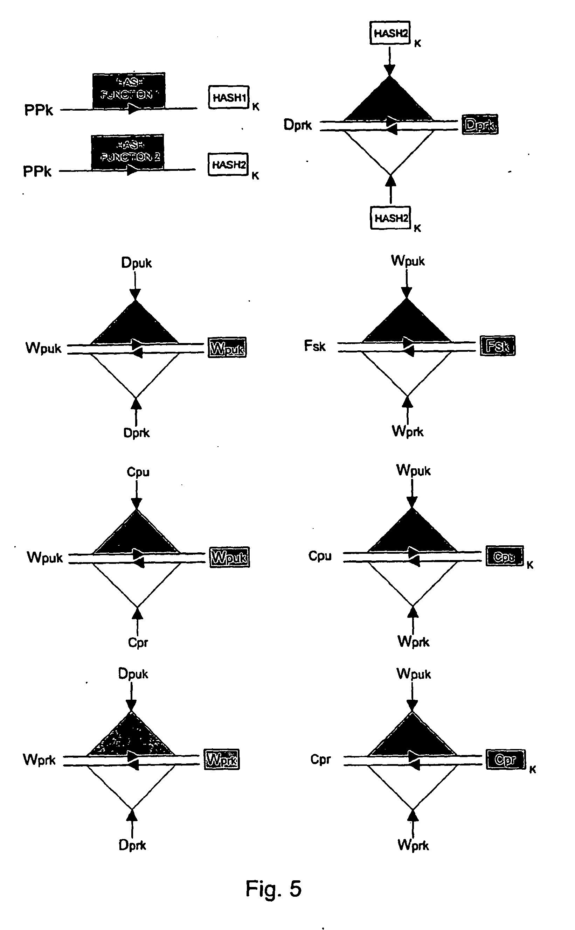

The figures 2 and 5, show shorthand diagrammatic notation to represent encryption and decryption operations. In particular, both such operations require two input quantities (the data and the key) and produce one output data stream. In the chosen notation, this process is represented by a triangle, where the input and output data are related to the vertices of the triangle's base and where the encryption/decryption key is related to the third vertex. In particular, encryption of a given input will be represented using a dark filled triangle diagram as shown in part (A) of Fig.1a. The corresponding decryption process is represented using the diagram shown in part (B) of Fig.1a.

With particular reference to the figures, there is provided a data processing system 100, generally a server, having in a known manner, a CPU 120, data storage means which can be either unique or separated in different parts for storing different type of data. A part 111 of the storage means can be dedicated to the storage of encryption and decryption keys and a second part of the storage means 110 can be dedicated to the storage of encrypted data. In a known manner, the server 100 has an interface for communicating with telecommunication means 200 to connect to a second data processing system, generally a client 300. The telecommunication means can obviously be of any type used for data transfer.

This client 300, advantageously is a computer or a personal computer and comprises a CPU 320, data storage means for storage of data and of encryption/decryption keys. The data storage means can be either the same or be separated, e.g. the key storage means 311 can be advantageously a magnetic or an optical disc, while the data storage means 320 can be a magnetic hard disc 310.

The user controls and accesses the client 300 by means of a keyboard 202 or of any other suitable interface 201 of the known type.

In such a computer system data communication, storage and retrieval can be performed safely by means of a distributed key cryptography system which is controlled by means of a method for authentication of users and for encrypting and decrypting keys and data according to the invention hereafter described.

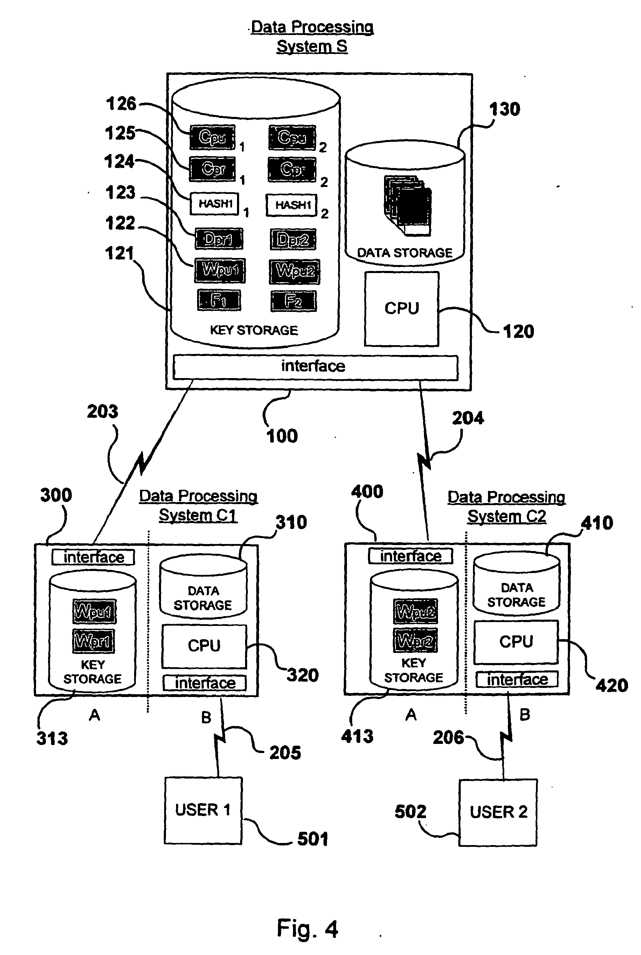

The system is at first initialised at the request of users which want to have access to the system. It is noteworthy that such initialisation and registration procedure, overseeing the generation of all encryption keys and hashes, should be performed under the strict control of the user in order to assure total confidentiality. The operations required by the initialisation and registration procedure, including key generation, encryption, storage and transmission, could for example be performed on the client using an executable code obtained from a centralized service authority, for example downloaded as an Internet browser Applet component or executed as a client application. In one possible case, during the registration procedure, the user provides a password or a passphrase PP, which is hashed by means of a hash function 1, producing a hash1 which is transmitted to the server 100 and kept in appropriate storage medium 111. Furthermore, the private key Fk and the two key encrypting keys Dk and Wk are generated, encrypted and stored in appropriate storage media of client 300 and of server 100 as detailed in Fig. 1 and Fig. 2. After all the elements of the preferred embodiment are successfully generated and distributed, the users can work with the system. Advantageously the key storage 311 can be a separate storage media (part A of Fig. 1 and 4) other than the data storage media (part B of Fig. 1 and 4), without departing from the scope of the invention.

During normal operation of the system, the user is prompted to provide his user ID or username and the passphrase PP, stage 600. The client system 300 hashes, step 602, the passphrase PP using hashing function 1, thus producing hash1. The client 300 transmits, via the telecommunication means, hash1 to the server and the latter performs the authentication of hash1 received from the client 300 with the hash 1 previously stored following the initialisation procedure, step 606.

If authentication, step 606, is successful the server 100 provides the client 300 with the encrypting key Dk in encrypted form via telecommunication means 200.

At the same time, in step 604, the passphrase PP is hashed by a second hashing function 2, producing a hash 2 which is stored in storage means of the client system 300 and is used for decrypting the encrypted key Dk, step 610. After the decrypted key Dk is validated, the authentication procedure is completed and the user authenticated.

The decrypted key Dk is then used by the client to decrypt the key encrypting key Wk, which was kept stored in encrypted form in the permanent storage means of the client system 300, step 612.

The user requests a private key Fk, stored in encrypted form in the storage means of the server 100, step 614. The client system 300 decrypts the private key Fk by means of the key Wk, step 616. By means of the decrypted private key Fk, the client system 300 decrypts data, e.g. an encrypted working document or message of any known type, step 620.

The document is either stored in encrypted form in the storage means of the client 300, or preferably in the storage means of the server 100. In the latter case the encrypted document 618 is sent via the telecommunication means 200 to the client system 300. After decryption of the document, the user can work with any appropriate software application on the document.

In this embodiment of the method of the invention the private key Fk is advantageously stored in the storage means of the server in encrypted form, but the server does not have at disposal the decrypting key Wk which is stored only on the client system.

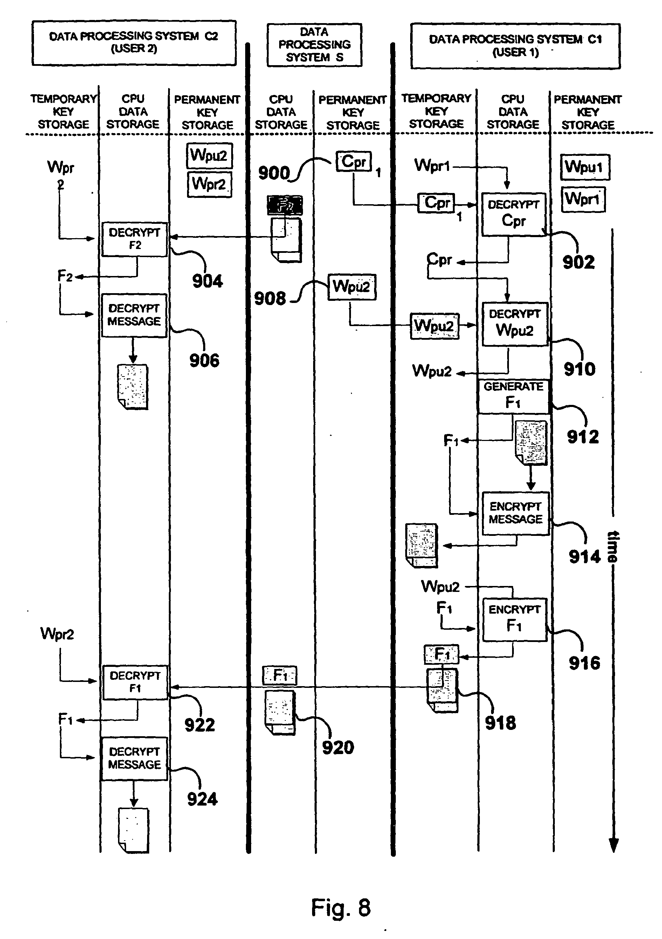

In a second embodiment of the invention, having particular reference to figures 4 to 8, the computer system used in connection with the first embodiment of the method of the invention is basically the same and differs in that there is a second client system 400, connected to the server system 100 by means of the telecommunication line 204, of any appropriate known type, too. The client system 400 is of a known type too, and can be similar or different from the client system 300. Advantageously the second client system 400 can be used by another user 502, either wanting to share data with the first user 501 and/or wanting to work with his own data under the security conditions offered by the system of the invention, in the same manner as described above in connection with the first client system 300.

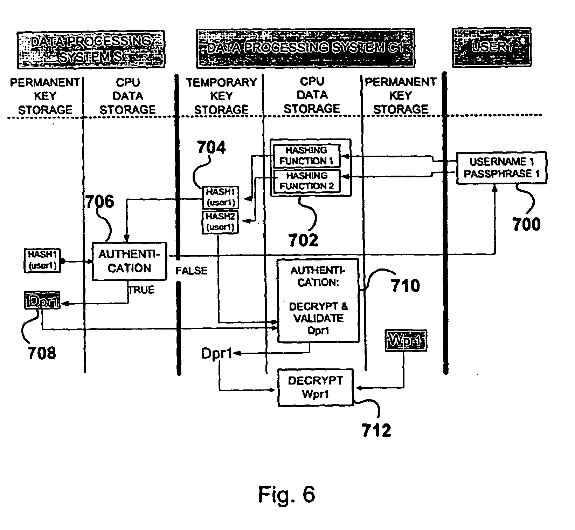

The initialisation of the computer system can be made in a similar manner as in the first embodiment described above, both for the first client system 300 and for the second client system 400. In this case, with reference to Fig. 5 where k= 1 refers to client 300 and k=2 refers to client 400, each of the client systems generates during initialisation one pair of asymmetric keys, comprising public and private part, respectively Wpu1, Wpr1, Wpu2 and Wpr2, instead of only one symmetric key. Wpu1 and Wpu2, reference 122, can be transmitted and stored, each of them encrypted by means of a community public key Cpu, also in the storage means 121 of the server 100. The community private key Cpr is also transmitted and stored in storage means 121 of the server system in two encrypted forms during initialisation of the system, obtained using the users public keys, Wpu1 and Wpu2, references 125 and 126 and Fig. 5. The first steps of the authentication procedure to the server 100 by first client system 300 and second client system 400 follow a similar pattern as in the first embodiment where only one client system is provided. This authentication procedure is shown in Fig. 6 for the first client server 300, whereby the user 1 is prompted to provide his user ID or username and the passphrase PP1, stage 700. The client system 300 hashes, step 702, the passphrase PP1 using hashing function 1, thus producing hash1 of user 1. The client 300 transmits, via the telecommunication means, hash1 of user 1 to the server 100 and the latter compares hash1 of user 1 received from the client 300 with the hash1 of user 1 stored following the initialisation procedure, step 706.

If this authentication, step 706, is successful the server 100 provides the client 300 with the encrypting key Dpr1 in encrypted form via telecommunication means 203.

At the same time, in step 704, the passphrase PP1 is hashed by a second hashing function 2, producing a hash2 of user 1 which is stored in the storage means 310 of the client system 300 and is used for decrypting the encrypted key Dpr1, step 710. After the decrypted key Dpr1 is validated, the authentication procedure is completed and the user 1 authenticated.

The decrypted key Dpr1 is then used by the client to decrypt, step 712, the decrypting key Wpr1, which was kept stored in encrypted form advantageously in the permanent storage means 313 of the client system 300.

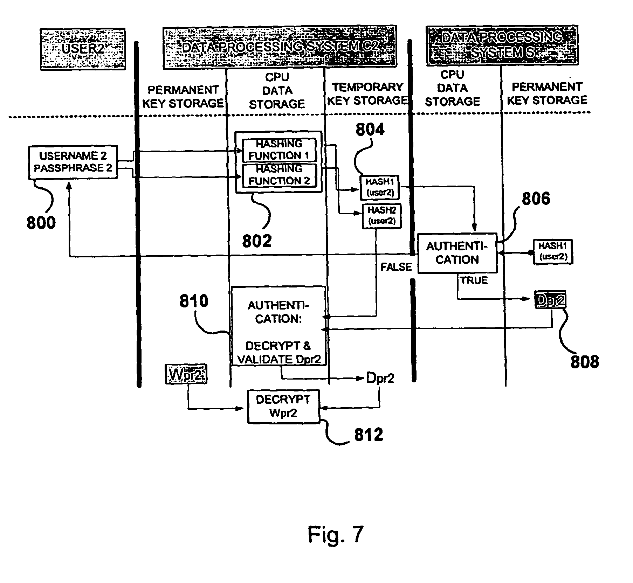

The access procedure for the second client server 400 is shown in Fig. 7, whereby the user 2 is prompted to provide his user ID or username and his own passphrase PP2, preferably different from that of user 1, stage 800. The client system 400 hashes, step 802, the passphrase PP2 using hashing function 1, thus producing hash1 of user 2, The client 400 transmits, via the telecommunication means, hash1 of user 2 to the server 100 and the latter makes the authentication of hash1 of user 2 received from the client 400 with the hash1 of user 2 stored following the initialisation procedure, step 806.

If this authentication, step 806, is successful the server 100 provides the client 400 with the encrypting key Dpr2 in encrypted form via telecommunication means 204.

At the same time, in step 804, the passphrase PP2 is hashed by a second hashing function 2, producing a hash2 of user 2 which is stored in the temporary storage means 420 of the client system 400 and is used for decrypting the encrypted key Dpr2, step 810. After the decrypted key Dpr2 is validated, the authentication procedure is completed and user 2 authenticated.

The decrypted key Dpr2 is then used by the client to decrypt the decrypting key Wpr2, which was kept stored in encrypted form in the permanent storage means 413 of the client system 400.

After authentication of client system 300 and client system 400 has taken place, the two users of the client systems can either work independently using the system as described in the first embodiment or can exchange encrypted data. In this latter case, for example the server will provide client system 300 with the community private key Cpr previously encrypted using Wpu1, step 900. The Cpr is decrypted by client system 300 by means of the decrypting key Wpr1, step 902.

The server system 100 transmits the encrypted key Wpu2 of client system 400 to client system 300. The key Cpr is used by client 300 to decrypt Wpu2, step 906. At the same time client 300 generates a document encrypting key F1, step 912, by means of which it encrypts any message to be sent to client 400, step 914. In the following step client 300 encrypts F1 by means of Wpu2, step 916, and the encrypted document, together with the encrypted document key F1 are sent, step 918, to the server 100 which forwards it to client system 400, step 920.

Client system 400 decrypts the key F1, step 922, by means of Wpr2, which was stored in permanent storage means of client system 400, and subsequently it decrypts the document by means of F1, step 924.

Alternatively to this option or in parallel to it, client system 400 can work separately on the same document or on a different document. If this document already existed it might be either on the storage means of the server system 100, in encrypted form or on the storage means of the client system 400. The client system 400 decrypts by means of Wpr2 the document encrypting key F2, step 904 and successively the document is decrypted by means of the document encrypting key F2, step 906. This message may either be sent to client system 300, to the server system 100, or be kept in the storage means of the client system 300, or the user can choose any combination of the latter, according to its needs.

Obviously the method of the invention can be extended to the case where more than two clients are connected to the server, without departing from the scope of the invention.

## Claims

1. A method for authentication, data communication, storage and retrieval in a distributed key cryptography system, wherein there are provided
at least one client system (300), comprising data storage means (311, 313) initially storing
at least one encrypted first key encrypting key (Wk), (Wpu1, Wpr1), first and second hashing functions able to compute at least first and second hashes from at least one passphrase,
a server system (100) comprising data storage means (111, 121) initially storing a first hash at least one encrypted second key encrypting key (Dk), (Dpr1) encrypted by a second hash value, at least one encrypted symmetric third key (Fk), (F1) being encrypted by means of the first key encrypting key, and encrypted data,
the method comprising the following steps:
a) the at least one client system (300) hashing the at least one passphrase using the first hashing function, so as to compute the first hash,
b) the at least one client system (300) transmitting, via telecommunication means (200, 203), the first hash to the server system (100);
c) the server system (100) performing an authentication of the first hash comparing it with the first hash stored on the storage means of the server;
d) the server system (100) providing the at least one client system (300) with the at least one second key encrypting key (Dk), (Dpr1) in encrypted form over telecommunication means (200, 203) if said authentication is successful,
**characterized in that**
e) the at least one client system (300) hashes the passphrase by means of the second hashing function, so as to produce the second hash;
f) the at least one client system (300) utilizes the second hash for decrypting the at least one encrypted second key encrypting key (Dk), (Dpr1);
g) the at least one client system (300) utilizes the decrypted second key encrypting key (Dk), (Dpr1) for decrypting the at least one first key encrypting key (Wk), (Wpu1, Wpr1), stored in encrypted form only in storage means (311, 313) of the client system (300);
h) the server system (100) transmits the at least one encrypted symmetric third key (Fk), (F1), stored in encrypted form in storage means (111, 121) of the server system (100), to the at least one client system (300);
i) the at least one client system (300) decrypts the at least one third Key (Fk), (F1) by means of the at least one first key encrypting key (Wk), (Wpu1, Wpr1);
j) the at least one client system (300) decrypts data by means of the at least one third key (Fk), (F1).

2. Method according to claim 1, further comprising:
storing the first hash in permanent storage means of the server system (100) during an initialization procedure and storing the second hash only in temporary storage means of the at least one client system (300) during operation.

3. Method according to claim 2, further comprising before step a) prompting a user to provide at least one user ID and at least one passphrase.

4. Method according to claim 3, further comprising the first key encrypting key (Wk) being of a symmetric type.

5. Method according to claim 4, further comprising:
- providing a second client system (400);
- providing another second key encrypting key (Dpr2) and another symmetric third key (F2);
- replacing the first key encrypting key (Wk) with one pair of asymmetric first key encrypting keys, comprising first and second public and private keys (Wpu1, Wpr1), (Wpu2, Wpr2).
- providing community public and private keys (Cpu, Cpr)

6. Method according to claim 5, whereby said community public and private keys (Cpu, Cpr), said another second key encrypting key (Dpr2), another third key (F2) are stored in the storage means of the server system (100) and said first public and private keys, (Wpu1, Wpr1) and second public and private keys (Wpu2, Wpr2) are stored in encrypted form in storage means of respective said client systems (300, 400).

7. System for authentication, data communication, storage and retrieval in a distributed key cryptography system, comprising at least one client system (300), comprising data storage means (311, 313) storing initially at least one encrypted first key encrypting key (Wk), (Wpu1, Wpr1), first and second hashing functions that can perform encryption and decryption operations and able to compute at least first and second hashes from a passphrase string,
a server system (100) comprising data storage means (111, 121) initially storing a first hash at least one encrypted second key encrypting key (Dk), (Dpr1) encrypted by a second hash value, at least one encrypted symmetric third key (Fk), (F1) being encrypted by means of the first key encrypting key, and encrypted data, and
a) means in the at least one client system (300) for hashing a passphrase using the first hashing function, so as to compute the first hash;
b) means in the at least one client system (300) for transmitting, via telecommunication means (200, 203), the first hash to the server system (100);
c) means in the server system (100) performing an authentication of the first hash comparing it with the first hash stored on the storage means of the server;
d) means in the server system (100) providing the at least one client system (300) with at least one second key encrypting key (Dk), (Dpr1, Dpr2) in encrypted form over telecommunication means (200, 203) if said authentication is successful, **characterized in that** there are provided
e) means in the at least one client system (300) hashing the passphrase by means of the second hashing function, so as to produce a second hash;
f) means in the at least one client system (300) for utilizing the second hash for decrypting the at least one encrypted second key encrypting key (Dk), (Dpr1) ;
g) means in the at least one client system (300) for utilizing the decrypted second key encrypting key (Dk), (Dpr1) for decrypting the at least one first key encrypting key (Wk), (Wpu1, Wpr1), stored in encrypted form only in storage means (311, 313) of the client system (300);
h) means in the server system (100) for transmitting the at least one symmetric third key (Fk), (F1), stored in encrypted form in storage means (111, 121) of the server system (100), to the at least one client system (300);
i) means for decrypting the symmetric third key (Fk), (F1) by means of the first key encrypting key (Wk), (Wpu1, Wpr1);
j) means in the client system (300) for decrypting data by means of the at least one_symmetric third key (Fk).

8. System according to claim 7, further comprising:
- a second client system (400);
- means for providing community public and private keys (Cpu, Cpr), another second key encrypting key (Dpr2) and another symmetric third key (F2);
- means for replacing the first key encrypting key (Wk) with one pair of asymmetric first key encrypting keys, comprising first public and private keys, (Wpu1, Wpr1) and second public and private keys (Wpu2, Wpr2);
- means in the server system (100) for storing in storage means of server system (100) said community public and private keys (Cpu, Cpr), said another second key encrypting key (Dpr2), said another symmetric third key (F2);
- means for storing said first public and private keys, (Wpu1, Wpr1) and second public and private keys (Wpu2, Wpr2) in encrypted form in storage means of respective said client systems (300, 400).

9. A computer program product in a computer usable medium, comprising:
a) instructions in at least one client system (300), for initially storing at least one encrypted first key encrypting key (Wk), (Wpu1, Wpr1), first and second hashing functions able to compute at least first and second hashes from at least one passphrase,
b) instructions in a server system (100) for initially storing a first hash at least one encrypted second key encrypting key (Dk), (Dpr1) encrypted by a second hash value, at least one encrypted symmetric third key (Fk), (F1) being encrypted by means of the first key encrypting key, and encrypted data,
c) instructions in the at least one client system (300) for hashing the at least one passphrase using a first hashing function, so as to produce a first hash, and using a second hashing function so as to produce a second hash;
d) instructions in the client system for transmitting, via telecommunication means (200), the first hash to the at least one client system (300);
e) instructions in the server system (100) for performing an authentication of the first hash comparing it with the first hash stored in the server system (100);
f) instructions in the server system (100) for providing the at least one client system (300) with the at least one second key encrypting key (Dk), (Dpr1), in encrypted form over telecommunication means (200, 203);
g) instructions in the at least one client system (300) for hashing the at least one_passphrase by means of the second hashing function, so as to produce the second hash;
h) instructions in the at least one client system (300) for utilising the second hash for decrypting the at least one encrypted second key encrypting key (Dk), (Dpr1);
i) instructions in the at least one client system (300) for utilizing the decrypted at least one_second key encrypting key (Dk), (Dpr1) for decrypting the at least one first key encrypting key (Wk), (Wpu1, Wpr1 stored in encrypted form in storage means of the at least one_client system (300);
j) instructions in the server system (100) for transmitting a symmetric third key (Fk), stored in encrypted form in storage means of the server system (100), to the at least one client system (300);
k) instructions in the at least one client system (300) for decrypting data by means of the at least one symmetric third key (Fk);
l) instructions in for decrypting the at least one symmetric third key (Fk), (F1) by means of the at least one first key encrypting key (Wk) (Wpu1, Wpr1);

10. A computer program product according to claim 9, further comprising:
- instructions for providing community public and private keys (Cpu, Cpr), another second key encrypting key (Dpr2) and another symmetric third key (F2);
- instructions for replacing the first key encrypting key (Wk) with one pair of asymmetric first key encrypting keys, comprising first public and private keys, (Wpu1, Wpr1) and second public and private keys (Wpu2, Wpr2);
instructions in the server system (100) for storing in storage means of the server system (100) said community public and private keys (Cpu, Cpr), said another second key encrypting key (Dpr2), said another third key (F2);
- instructions for storing said first public and private keys, (Wpu1, Wpr1) and second public and private keys (Wpu2, Wpr2) in encrypted form in storage means of respective said client systems (300).

## Patentansprüche

1. Verfahren zur Authentisierung, Datenkommunikation, -speicherung und -wiedergewinnung in einem verteilten Kryptographiesystem, in dem Folgendes bereitgestellt werden:
wenigstens ein Client-System (300), das Datenablagemittel (311, 313) umfasst, die anfangs Folgendes speichern:
wenigstens ein verschlüsselter erster Schlüsselverschlüsselungsschlüssel (Wk), (Wpu1, Wpr1) und eine erste und eine zweite Hash-Codierungsfunktion, die aus wenigstens einer Passphrase wenigstens einen ersten und einen zweiten Hash berechnen können,
ein Server-System (100), das Datenablagemittel (111, 121) umfasst, die anfangs einen ersten Hash, wenigstens einen verschlüsselten zweiten Schlüsselverschlüsselungsschlüssel (Dk), (Dpr1), der durch einen zweiten Hash-Wert verschlüsselt worden ist, wenigstens einen verschlüsselten symmetrischen dritten Schlüssel (Fk), (F1), der mittels des ersten Schlüsselverschlüsselungsschlüssels verschlüsselt worden ist, und verschlüsselte Daten speichern,
wobei das Verfahren die folgenden Schritte umfasst:
a) das wenigstens eine Client-System (300) Hash-codiert unter Verwendung der ersten Hash-Codierungsfunktion die wenigstens eine Passphrase, um den ersten Hash zu berechnen,
b) das wenigstens eine Client-System (300) sendet den ersten Hash über Telekommunikationsmittel (200, 203) an das Server-System (100);
c) das Server-System (100) führt eine Authentisierung des ersten Hash aus, wobei es ihn mit dem ersten Hash vergleicht, der in den Ablagemitteln des Servers gespeichert ist;
d) falls die genannte Authentisierung erfolgreich ist, liefert das Server-System (100) den wenigstens einen zweiten Schlüsselverschlüsselungsschlüssel (Dk), (Dpr1) in verschlüsselter Form über die Telekommunikationsmittel (200, 203) an das wenigstens eine Client-System (300),
**dadurch gekennzeichnet, dass**
e) das wenigstens eine Client-System (300) die Passphrase mittels der zweiten Hash-Funktion Hash-codiert, um den zweiten Hash zu erzeugen;
f) das wenigstens eine Client-System (300) den zweiten Hash nutzt, um den wenigstens einen verschlüsselten zweiten Schlüsselverschlüsselungsschlüssel (Dk), (Dpr1) zu entschlüsseln;
g) das wenigstens eine Client-System (300) den entschlüsselten zweiten Schlüsselverschlüsselungsschlüssel (Dk), (Dpr1) nutzt, um den wenigstens einen ersten Schlüsselverschlüsselungsschlüssel (Wk), (Wpu1, Wpr1), der nur in verschlüsselter Form in den Ablagemitteln (311, 313) des Client-Systems (300) gespeichert ist, zu entschlüsseln;
h) das Server-System (100) den wenigstens einen verschlüsselten symmetrischen dritten Schlüssel (Fk), (F1), der in verschlüsselter Form in den Ablagemitteln (111, 121) des Server-Systems (100) gespeichert ist, an das wenigstens eine Client-System (300) sendet;
i) das wenigstens eine Client-System (300) den wenigstens einen dritten Schlüssel (Fk), (F1) mittels des wenigstens einen ersten Schlüsselverschlüsselungsschlüssels (Wk), (Wpu1, Wpr1) entschlüsselt;
j) das wenigstens eine Client-System (300) Daten mittels des wenigstens einen dritten Schlüssels (Fk), (F1) entschlüsselt.

2. Verfahren gemäß Anspruch 1, das ferner umfasst:
Speichern des ersten Hash in Festwertspeichermitteln des Server-Systems (100) während einer Initialisierungsprozedur und Speichern des zweiten Hash nur in Zwischenspeichermitteln des wenigstens einen Client-Systems (300) während des Betriebs.

3. Verfahren gemäß Anspruch 2, das ferner vor dem Schritt a) das Auffordern eines Anwenders, wenigstens eine Anwender-ID und wenigstens eine Passphrase zu liefern, umfasst.

4. Verfahren gemäß Anspruch 3, das ferner den ersten Schlüsselverschlüsselungsschlüssel (Wk) umfasst, der von einem symmetrischen Typ ist.

5. Verfahren gemäß Anspruch 4, das ferner umfasst:
- Bereitstellen eines zweiten Client-Systems (400)
- Bereitstellen eines weiteren zweiten Schlüsselverschlüsselungsschlüssels (Dpr2) und eines weiteren symmetrischen dritten Schlüssels (F2);
- Ersetzen des ersten Schlüsselverschlüsselungsschlüssels (Wk) durch ein Paar asymmetrischer erster Schlüsselverschlüsselungsschlüssel, das einen ersten öffentlichen Schlüssel und einen ersten privaten Schlüssel und einen zweiten öffentlichen Schlüssel und einen zweiten privaten Schlüssel (Wpu1, Wpr1), (Wpu2, Wpr2) umfasst;
- Bereitstellen des für die Gemeinschaft öffentlichen und des für die Gemeinschaft privaten Schlüssels (Cpu, Cpr).

6. Verfahren gemäß Anspruch 5, durch das der genannte für die Gemeinschaft öffentliche Schlüssel und der genannte für die Gemeinschaft private Schlüssel (Cpu, Cpr), der genannte weitere zweite Schlüsselverschlüsselungsschlüssel (Dpr2) und ein weiterer dritter Schlüssel (F2) in den Ablagemitteln des Server-Systems (100) gespeichert werden und der genannte erste öffentliche Schlüssel und der genannte erste private Schlüssel (Wpu1, Wpr1) und der zweite öffentliche Schlüssel und der zweite private Schlüssel (Wpu2, Wpr2) in verschlüsselter Form in Ablagemitteln der jeweiligen genannten Client-Systeme (300, 400) gespeichert werden.

7. System zur Authentisierung, Datenkommunikation, -speicherung und -wiedergewinnung in einem verteilten Kryptographiesystem, das Folgendes umfasst: wenigstens ein Client-System (300), das Datenablagemittel (311, 313) umfasst, die anfangs wenigstens einen verschlüsselten ersten Schlüsselverschlüsselungsschlüssel (Wk), (Wpu1, Wpr1), eine erste und eine zweite Hash-Codierungsfunktion, die Verschlüsselungs- und Entschlüsselungsoperationen ausführen und aus einer Passphrasen-Zeichenfolge wenigstens einen ersten und einen zweiten Hash berechnen können, speichern,
ein Server-System (100), das Datenablagemittel (111, 121) umfasst, die anfangs einen ersten Hash, wenigstens einen verschlüsselten zweiten Schlüsselverschlüsselungsschlüssel (Dk), (Dpr1), der durch einen zweiten Hash-Wert verschlüsselt worden ist, wenigstens einen verschlüsselten symmetrischen dritten Schlüssel (Fk), (F1), der mittels des ersten Schlüsselverschlüsselungsschlüssels verschlüsselt worden ist, und verschlüsselte Daten speichern, und
a) Mittel in dem wenigstens einen Client-System (300) zum Hash-codieren der wenigstens eine Passphrase unter Verwendung der ersten Hash-Codierungsfunktion, um den ersten Hash zu berechnen,
b) Mittel in dem wenigstens einen Client-System (300) zum Senden des ersten Hash über Telekommunikationsmittel (200, 203) an das Server-System (100);
c) Mittel in dem Server-System (100) zum Ausführen einer Authentisierung des ersten Hash, wobei sie ihn mit dem ersten Hash vergleichen, der in den Ablagemitteln des Servers gespeichert ist;
d) Mittel in dem Server-System (100), die den wenigstens einen zweiten Schlüsselverschlüsselungsschlüssel (Dk), (Dpr1, Dpr2) in verschlüsselter Form über die Telekommunikationsmittel (200, 203) an das wenigstens eine Client-System (300) liefern, falls die genannte Authentisierung erfolgreich ist,
**dadurch gekennzeichnet, dass** Folgendes bereitgestellt ist:
e) Mittel in dem wenigstens einen Client-System (300), die die Passphrase mittels der zweiten Hash-Funktion Hash-codieren, um den zweiten Hash zu erzeugen;
f) Mittel in dem wenigstens einen Client-System (300), um den zweiten Hash zu nutzen, um den wenigstens einen verschlüsselten zweiten Schlüsselverschlüsselungsschlüssel (Dk), (Dpr1) zu entschlüsseln;
g) Mittel in dem wenigstens einen Client-System (300), um den entschlüsselten zweiten Schlüsselverschlüsselungsschlüssel (Dk), (Dpr1) zu nutzen, um den wenigstens einen ersten Schlüsselverschlüsselungsschlüssel (Wk), (Wpu1, Wpr1), der nur in verschlüsselter Form in den Ablagemitteln (311, 313) des Client-Systems (300) gespeichert ist, zu entschlüsseln;
h) Mittel in dem Server-System (100) zum Senden des wenigstens einen symmetrischen dritten Schlüssels (Fk), (F1), der in verschlüsselter Form in den Ablagemitteln (111, 121) des Server-Systems (100) gespeichert ist, an das wenigstens eine Client-System (300);
i) Mittel zum Entschlüsseln des symmetrischen dritten Schlüssels (Fk), (F1) mittels des ersten Schlüsselverschlüsselungsschlüssels (Wk), (Wpu1, Wpr1);
j) Mittel in dem Client-System (300) zum Entschlüsseln von Daten mittels des wenigstens einen symmetrischen dritten Schlüssels (Fk).

8. System gemäß Anspruch 7, das ferner umfasst:
- ein zweites Client-System (400);
- Mittel zum Bereitstellen eines öffentlichen und eines privaten Schlüssels (Cpu, Cpr), eines weiteren zweiten Schlüsselverschlüsselungsschlüssels (Dpr2) und eines weiteren symmetrischen dritten Schlüssels (F2);
- Mittel zum Ersetzen des ersten Schlüsselverschlüsselungsschlüssels (Wk) durch ein Paar asymmetrischer erster Schlüsselverschlüsselungsschlüssel, die einen ersten öffentlichen Schlüssel und einen ersten privaten Schlüssel (Wpu1, Wpr1) und einen zweiten öffentlichen Schlüssel und einen zweiten privaten Schlüssel (Wpu2, Wpr2) umfassen;
- Mittel in dem Server-System (100) zum Speichern des genannten für die Gemeinschaft öffentlichen Schlüssels und des genannten für die Gemeinschaft privaten Schlüssels (Cpu, Cpr), des genannten weiteren Schlüsselverschlüsselungsschlüssels (Dpr2) (100) und des genannten weiteren symmetrischen dritten Schlüssels (F2) in Ablagemitteln des Server-Systems;
- Mittel zum Speichern des ersten öffentlichen Schlüssels und des ersten privaten Schlüssels (Wpu1, Wpr1) und des zweiten öffentlichen Schlüssels und des zweiten privaten Schlüssels (Wpu1, Wpr1) in verschlüsselter Form in Ablagemitteln der jeweiligen genannten Client-Systeme (300, 400).

9. Computerprogrammprodukt in einem computernutzbaren Medium, wobei das Computerprogrammprodukt umfasst:
a) Anweisungen in dem wenigstens ein Client-System (300), um anfangs wenigstens einen verschlüsselten ersten Schlüsselverschlüsselungsschlüssel (Wk), (Wpu1, Wpr1) und eine erste und eine zweite Hash-Codierungsfunktion, die aus wenigstens einer Passphrase wenigstens einen ersten und einen zweiten Hash berechnen können, zu speichern,
b) Anweisungen in einem Server-System (100), um anfangs einen ersten Hash, wenigstens einen verschlüsselten zweiten Schlüsselverschlüsselungsschlüssel (Dk1), (Dpr1), der durch einen zweiten Hash-Wert verschlüsselt worden ist, wenigstens einen verschlüsselten symmetrischen dritten Schlüssel (Fk), (F1), der mittels des ersten Schlüsselverschlüsselungsschlüssels verschlüsselt worden ist, und verschlüsselte Daten zu speichern,
c) Anweisungen in dem wenigstens einen Client-System (300) zum Hash-Codieren der wenigstens einen Passphrase unter Verwendung einer ersten Hash-Codierungsfunktion, um einen ersten Hash zu erzeugen, und zum Verwenden einer zweiten Hash-Codierungsfunktion, um einen zweiten Hash zu erzeugen;
d) Anweisungen in dem Client-System zum Senden des ersten Hash über Telekommunikationsmittel (200) an das wenigstens eine Client-System (300);
e) Anweisungen in dem Server-System (100) zum Ausführen einer Authentisierung des ersten Hash, wobei sie ihn mit dem ersten Hash vergleichen, der in dem Server-System (100) gespeichert ist;
f) Anweisungen in dem Server-System (100) zum Liefern des wenigstens einen zweiten Schlüsselverschlüsselungsschlüssels (Dk), (Dpr1) in verschlüsselter Form über die Telekommunikationsmittel (200, 203) an das wenigstens eine Client-System (300);
g) Anweisungen in dem wenigstens einen Client-System (300) zum Hash-codieren der wenigstens einen Passphrase mittels der zweiten Hash-Funktion, um den zweiten Hash zu erzeugen;
h) Anweisungen in dem wenigstens einen Client-System (300) zum Nutzen des zweiten Hash, um den wenigstens einen verschlüsselten zweiten Schlüsselverschlüsselungsschlüssel (Dk), (Dpr1) zu entschlüsseln;
i) Anweisungen in dem wenigstens einen Client-System (300) zum Nutzen des entschlüsselten wenigstens einen zweiten Schlüsselverschlüsselungsschlüssels (Dk), (Dpr1), um den wenigstens einen ersten Schlüsselverschlüsselungsschlüssel (Wk), (Wpu1, Wpr1), der nur in verschlüsselter Form in den Ablagemitteln des wenigstens einen Client-Systems (300) gespeichert ist, zu entschlüsseln;
j) Anweisungen in dem Server-System (100) zum Senden eines symmetrischen dritten Schlüssels (Fk), der in verschlüsselter Form in den Ablagemitteln des Server-Systems (100) gespeichert ist, an das wenigstens eine Client-System (300);
k) Anweisungen in dem wenigstens einen Client-System (300) zum Entschlüsseln von Daten mittels des wenigstens einen symmetrischen dritten Schlüssels (Fk);
l) Anweisungen in zum Entschlüsseln des wenigstens einen symmetrischen dritten Schlüssels (Fk), (F1) mittels des wenigstens einen ersten Schlüsselverschlüsselungsschlüssels (Wk) (Wpu1, Wpr1).

10. Computerprogrammprodukt gemäß Anspruch 9, das ferner umfasst:
- Anweisungen zum Bereitstellen eines für die Gemeinschaft öffentlichen Schlüssels und eines für die Gemeinschaft privaten Schlüssels (Cpu, Cpr), eines weiteren zweiten Schlüsselverschlüsselungsschlüssels (Dpr2) und eines weiteren symmetrischen dritten Schlüssels (F2)
- Anweisungen zum Ersetzen des ersten Schlüsselverschlüsselungsschlüssels (Wk) durch ein Paar asymmetrischer erster Schlüsselverschlüsselungsschlüssel, das einen ersten öffentlichen Schlüssel und einen ersten privaten Schlüssel und einen zweiten öffentlichen Schlüssel (Wpu1, Wpr1) und einen zweiten privaten Schlüssel (Wpu2, Wpr2) umfasst;
- Anweisungen in dem Serversystem (100) zum Speichern des genannten für die Gemeinschaft öffentlichen und des genannten für die Gemeinschaft privaten Schlüssels (Cpu, Cpr), des genannten weiteren zweiten Schlüsselverschlüsselungsschlüssels (Dpr2) und des genannten weiteren dritten Schlüssels (F2) in Ablagemitteln des Serversystems (100);
- Anweisungen zum Speichern des genannten ersten öffentlichen Schlüssels und des genannten ersten privaten Schlüssels (Wpu1, Wpr1) und des genannten zweiten öffentlichen Schlüssels und des genannten zweiten privaten Schlüssels (Wpu2, Wpr2) in verschlüsselter Form in Ablagemitteln des jeweiligen genannten Client-Systems (300).

## Revendications

1. Procédé d'authentification, de communication, de stockage et de récupération de données dans un système de cryptographie à clé distribuée, dans lequel il est proposé:
au moins un système client (300) comprenant des moyens de stockage de données (311, 313) stockant initialement:
au moins une première clé chiffrée de chiffrement de clé (Wk), (Wpu1, Wpr1), une première et une seconde fonctions de hachage capables de calculer au moins un premier et un second hachages à partir d'au moins une phrase de passe,
un système serveur (100) comprenant des moyens de stockage de données (111, 121) stockant initialement un premier hachage, au moins une deuxième clé chiffrée de chiffrement de clé (Dk), (Dpr1) chiffrée par une seconde valeur de hachage, au moins une troisième clé chiffrée symétrique (Fk), (F1) étant chiffrée au moyen de la première clé de chiffrement de clé, et des données chiffrées,
le procédé comprenant les étapes suivantes:
a) l'au moins un système client (300) hachant l'au moins une phase de passe à l'aide de la première fonction de hachage de manière à calculer le premier hachage,
b) l'au moins un système client (300) transmettant, via des moyens de télécommunication (200, 203), le premier hachage au système serveur (100);
c) le système serveur (100) effectuant une authentification du premier hachage en le comparant au premier hachage stocké sur le moyen de stockage du serveur;
d) le système serveur (100) fournissant à l'au moins un système client (300) la au moins une deuxième clé de chiffrement de clé (Dk), (Dpr1) sous une forme chiffrée sur un moyen de télécommunication (200, 203) si ladite authentification est réussie,
**caractérisé en ce que**
e) l'au moins un système client (300) hache la phrase de passe au moyen de la seconde fonction de hachage de manière à produire le second hachage;
f) l'au moins un système client (300) utilise le second hachage pour déchiffrer l'au moins une deuxième clé chiffrée de chiffrement de clé (Dk), (Dpr1);
g) l'au moins un système client (300) utilise la deuxième clé de chiffrement de clé déchiffrée (Dk), (Dpr1) pour déchiffrer l'au moins une première clé de chiffrement de clé (Wk), (Wpu1, Wpr1), stockée sous une forme chiffrée uniquement dans des moyens de stockage (311, 313) du système client (300);
h) le système serveur (100) transmet l'au moins troisième clé chiffrée symétrique (Fk), (F1), stockée sous une forme chiffrée dans les moyens de stockage (111, 121) du système serveur (100), à l'au moins un système client (300);
i) l'au moins un système client (300) déchiffre l'au moins une troisième clé chiffrée symétrique (Fk), (F1) au moyen de l'au moins une première clé de chiffrement de clé (Wk), (Wp1, Wpr1);
j) l'au moins un système client (300) déchiffre des données au moyen de l'au moins une troisième clé (Fk), (F1) .

2. Procédé selon la revendication 1, comprenant en outre les étapes consistant à:
stocker le premier hachage dans un moyen de stockage permanent du système serveur (100) au cours d'une procédure d'initialisation et stocker le second hachage uniquement dans un moyen de stockage temporaire de l'au moins un système client (300) en cours de fonctionnement.

3. Procédé selon la revendication 2, comprenant en outre, avant l'étape a), d'inviter un utilisateur à fournir au moins un identifiant d'utilisateur et au moins une phrase de passe.

4. Procédé selon la revendication 3, comprenant en outre que la première clé de chiffrement de clé (Wk) est de type symétrique.

5. Procédé selon la revendication 4, comprenant en outre les étapes consistant à:
- proposer un second système client (400);
- proposer une autre deuxième clé de chiffrement de clé (Dpr2) et une autre troisième clé symétrique (F2);
- remplacer la première clé de chiffrement de clé (Wk) par une paire de premières clés de chiffrement de clé asymétriques, comprenant une première et une deuxième clés publiques et privées (Wpu1, Wpr1), (Wpu2, Wpr2);
- fournir à la communauté des clés publique et privée (Cpu, Cpr).

6. Procédé selon la revendication 5, suivant lequel lesdites clés communautaires publique et privée (Cpu, Cpr), ladite autre deuxième clé de chiffrement de clé (Dpr2), ladite autre troisième clé (F2) sont stockées dans les moyens de stockage du système serveur (100) et lesdites premières clés publique et privée (Wpu1, Wpr1) et deuxièmes clés publique et privée (Wpu2, Wpr2) sont stockées sous une forme chiffrée dans les moyens de stockage desdits systèmes clients respectifs (300, 400).

7. Système d'authentification, de communication, de stockage et de récupération de données dans un système de cryptographie à clé distribuée, comprenant au moins un système client (300), comprenant des moyens de stockage de données (311, 313) stockant initialement au moins une première clé chiffrée de chiffrement de clé (Wk), (Wpu1, Wpr1), une première et une seconde fonctions de hachage qui peuvent effectuer des opérations de chiffrement et de déchiffrement et qui sont capables de calculer au moins un premier et un second hachages à partir d'une chaîne de phrase de passe,
un système serveur (100) comprenant des moyens de stockage de données (111, 121) stockant initialement un premier hachage, au moins une seconde clé chiffrée de chiffrement de clé (Dk), (Dpr1) chiffrée par une seconde valeur de hachage, au moins une troisième clé chiffrée symétrique (Fk), (F1) étant chiffrée au moyen de la première clé de chiffrement de clé, et des données chiffrées, et
a) un moyen dans l'au moins un système client (300) pour hacher une phase de passe à l'aide de la première fonction de hachage de manière à calculer le premier hachage,
b) un moyen dans l'au moins un système client (300) pour transmettre, via des moyens de télécommunication (200, 203), le premier hachage au système serveur (100);
c) un moyen dans le système serveur (100) effectuant une authentification du premier hachage en le comparant au premier hachage stocké sur le moyen de stockage du serveur;
d) un moyen dans le système serveur (100) fournissant à l'au moins un système client (300) au moins une seconde clé de chiffrement de clé (Dk), (Dpr1, Dpr2) sous une forme chiffrée sur un moyen de télécommunication (200, 203) si ladite authentification est réussie,
**caractérisé en ce qu'**il est pourvu
e) un moyen dans l'au moins un système client (300) hachant la phrase de passe au moyen de la seconde fonction de hachage de manière à produire un second hachage;
f) un moyen dans l'au moins un système client (300) pour utiliser le second hachage pour déchiffrer l'au moins une seconde clé chiffrée de chiffrement de clé (Dk), (Dpr1) ;
g) un moyen dans l'au moins un système client (300) pour utiliser la seconde clé de chiffrement de clé déchiffrée (Dk), (Dpr1) pour déchiffrer l'au moins une première clé de chiffrement de clé (Wk), (Wpu1, Wpr1), stockée sous une forme chiffrée uniquement dans des moyens de stockage (311, 313) du système client (300);
h) un moyen dans le système serveur (100) pour transmettre l'au moins une troisième clé symétrique chiffrée (Fk), (F1), stockée sous une forme chiffrée dans les moyens de stockage (111, 121) du système serveur (100), à l'au moins un système client (300);
i) un moyen pour déchiffrer l'au moins une troisième clé symétrique (Fk), (F1) au moyen de la première clé de chiffrement de clé (Wk), (Wp1, Wpr1);
j) un moyen dans le système client (300) pour déchiffrer des données au moyen de l'au moins une troisième clé symétrique (Fk), (F1).

8. Système selon la revendication 7, comprenant en outre:
un second système client (400);
un moyen pour fournir des clés communautaires publique et privée (Cpu, Cpr), une autre deuxième clé de chiffrement de clé (Dpr2) et une autre troisième clé symétrique (F2);
un moyen pour remplacer la première clé de chiffrement de clé (Wk) par une paire de premières clés de chiffrement de clé asymétriques, comprenant des premières clés publique et privée (Wpu1, Wpr1) et des deuxièmes clés publique et privée, (Wpu2, Wpr2);
un moyen dans le système serveur (100) pour stocker dans un moyen de stockage du système serveur (100) lesdites clés communautaires publique et privée (Cpu, Cpr), ladite autre deuxième clé de chiffrement de clé (Dpr2) et ladite autre troisième clé symétrique (F2);
un moyen pour stocker lesdites premières clés publique et privée (Wpu1, Wpr1) et lesdites deuxièmes clés publique et privée (Wpu2, Wpr2) sous une forme chiffrée dans un moyen de stockage desdits systèmes clients respectifs (300, 400).

9. Produit programme informatique sur un support utilisable par un ordinateur, comprenant:
a) des instructions dans au moins un système client (300) pour initialement stocker au moins une première clé chiffrée de chiffrement de clé (Wk), (Wpu1, Wpr1), une première et une seconde fonctions de hachage capables de calculer au moins un premier et un second hachages à partir d'au moins phrase de passe,
b) des instructions dans un système serveur (100) pour stocker initialement un premier hachage, au moins une deuxième clé chiffrée de chiffrement de clé (Dk), (Dpr1) chiffrée par une seconde valeur de hachage, au moins une troisième clé chiffrée symétrique (Fk), (F1) étant chiffrée au moyen de la première clé de chiffrement de clé, et des données chiffrées,
c) des instructions dans l'au moins un système client (300) pour hacher l'au moins une phase de passe à l'aide d'une première fonction de hachage de manière à produire un premier hachage, et à l'aide d'une seconde fonction de hachage de manière à produire un second hachage;
d) des instructions dans le système client pour transmettre, via des moyens de télécommunication (200), le premier hachage à l'au moins un système client (300);
e) des instructions dans le système serveur (100) pour effectuer une authentification du premier hachage en le comparant au premier hachage stocké dans le système serveur (100);
f) des instructions dans le système serveur (100) pour fournir à l'au moins un système client (300) la au moins une deuxième clé de chiffrement de clé (Dk), (Dpr1), sous une forme chiffrée sur un moyen de télécommunication (200, 203);
g) des instructions dans l'au moins un système client (300) pour hacher l'au moins une phrase de passe au moyen de la seconde fonction de hachage de manière à produire le second hachage;
h) des instructions dans l'au moins un système client (300) pour utiliser le second hachage pour déchiffrer l'au moins une deuxième clé de chiffrement de clé chiffrée (Dk), (Dpr1);
i) des instructions dans l'au moins un système client (300) pour utiliser l'au moins une deuxième clé de chiffrement de clé déchiffrée (Dk), (Dpr1) pour déchiffrer l'au moins une première clé de chiffrement de clé (Wk), (Wpu1, Wpr1) stockée sous une forme chiffrée dans un moyen de stockage de l'au moins un système client (300);
j) des instructions dans le système serveur (100) pour transmettre une troisième clé symétrique (Fk), stockée sous une forme chiffrée dans un moyen de stockage du système serveur (100), à l'au moins un système client (300);
k) des instructions dans l'au moins un système client (300) pour déchiffrer des données au moyen de l'au moins une troisième clé symétrique (Fk);
l) des instructions pour déchiffrer l'au moins une troisième clé symétrique (Fk), (F1) au moyen de l'au moins une première clé de chiffrement de clé (Wk) (Wpu1, Wpr1).

10. Produit programme informatique selon la revendication 9, comprenant en outre:
des instructions pour fournir des clés communautaires publique et privée (Cpu, Cpr), une autre deuxième clé de chiffrement de clé (Dpr2) et une autre troisième clé symétrique (F2);
des instructions pour remplacer la première clé de chiffrement de clé (Wk) par une paire de premières clés de chiffrement de clé asymétriques, comprenant des premières clés publique et privée (Wpu1, Wpr1) et des deuxièmes clés publique et privée, (Wpu2, Wpr2);
des instructions dans le système serveur (100) pour stocker dans un moyen de stockage du système serveur (100) lesdites clés communautaires publique et privée (Cpu, Cpr), ladite autre deuxième clé de chiffrement de clé (Dpr2) et ladite autre troisième clé (F2);
des instructions pour stocker lesdites premières clés publique et privée (Wpu1, Wpr1) et lesdites deuxièmes clés publique et privée (Wpu2, Wpr2) sous une forme chiffrée dans un moyen de stockage desdits systèmes clients respectifs (300).
